# EUROPEAN PATENT APPLICATION

(11) **EP 4 637 012 A1**
(43) Date of publication of application: **22.10.2025**
(21) Application number: 24171252.0
(22) Date of filing: 19.04.2024
(51) Int. Cl.: H02M 3/00, H02M 3/335, H02M 1/00, H02J 13/00

(54) **ISOLATED DC/DC CONVERTER WITH POWERLINE COMMUNICATION TRANSMISSION**

(71) Applicant: Hamilton Sundstrand Corporation, Charlotte, NC 28217-4578 (US)
(72) Inventor: BENN, Andrew, Kenilworth CV8 1DA (GB); ELWAKEEL, Abdelrahman Salaheldin Abdelhameed, Solihull B91 3DE (GB)
(74) Representative: Dehns

(57) **Abstract**

A voltage converter (110) for converting an input voltage to an output voltage. The voltage converter includes a controller (116) arranged to: superpose a power line communication signal onto a target DC output voltage to provide a target output voltage; compare the output voltage of the voltage converter with the target output voltage; and adjust operation of the voltage converter so as to drive the output voltage towards the target output voltage.

## Description

### Technical Field

This disclosure relates to voltage converters and power line communication.

### Background

Power line communication is a method of transmitting data over power distribution cables. Power line communication systems require the use of significant circuitry for each system connecting to the data bus. This circuitry may include a power supply, coupler and modem.

Some power distribution systems include a high voltage power supply and a low voltage power supply, with an intervening power converter, e.g. a DC-DC voltage converter arranged to convert one voltage to the other. Where power converters are used, the power line communication signal is not able to pass through the converters, e.g. from the high voltage supply to the low voltage supply, and therefore the power line communication signal cannot be communicated to the downstream loads.

Distribution networks for future electric aircraft may implement one or more DC-DC voltage converters for power distribution throughout the aircraft. These converters may convert a high voltage supply to a low voltage supply in order to power several solid state power controllers (SSPCs) or low voltage electronic loads. Low voltage electronic loads may include lighting systems, air conditioning systems, power supply to passengers' seats or the like. The high voltage supply may be used for high voltage loads, such as the aircraft's engine or the like.

In certain aircraft, the high voltage supply may include power line communication, e.g. for control of safety-critical systems, the aircraft's engine, emergency systems or the like. Power line communication may also be used to control SSPCs or low voltage electronic loads supplied by the low voltage power supply. However, as outlined above, any power line communication signal on the high voltage supply will not pass through the power converters. Therefore, the low voltage supply requires additional infrastructure to implement power line communication. For instance, a separate data network may be required and/or dual modems, one on the input network and one on the output network. This may be costly and/or relatively heavy, particularly where several converters are used.

In aerospace applications, weight is often a particularly important factor to consider when designing power distribution and communications systems. It is an aim to provide an improved voltage converter.

### Summary

The present disclosure provides a voltage converter for converting an input voltage to an output voltage, the voltage converter comprising: a controller arranged to: superpose a power line communication signal onto a target DC output voltage to provide a target output voltage, wherein the power line communication signal comprises a data signal; compare the output voltage of the voltage converter with the target output voltage; and adjust operation of the voltage converter so as to drive the output voltage towards the target output voltage.

The power line communication signal may comprise the data signal modulated onto a carrier wave.

The input voltage may be provided by an attached (e.g. high voltage) power supply. An input (e.g. high voltage) power distribution system may comprise the attached power supply and, e.g., the voltage converter. The attached power supply may comprise a battery, a generator (e.g. an electrical generator), a mains voltage supply or the like.

The output voltage may be provided to an attached (e.g. low voltage) load. The load may be, for example, a (e.g. solid state) power controller. An output (e.g. low voltage) power distribution system may comprise the attached load, e.g. a (e.g. solid state) power controller, and, e.g., the voltage converter.

The target DC output voltage component of the target output voltage may be a constant DC output voltage, or the DC output voltage may vary over time.

In some examples, the voltage converter comprises an inverter arranged to receive the input voltage and provide (output) an alternating voltage. The inverter may have any inverter topology. For instance, the inverter may be a half-bridge inverter, a full-bridge inverter or the like.

In some examples, the voltage converter comprises a rectifier arranged to rectify the alternating voltage (from the inverter) to provide the output voltage. The rectifier may have any suitable form of rectifier topology. For instance, the rectifier may be a full-bridge rectifier, a half-bridge rectifier, a push-pull rectifier or the like. The rectifier may be a passive rectifier or an active (i.e. synchronous rectifier). If the rectifier is an active rectifier, it may be arranged to operate with a switching frequency. For instance, the active rectifier may include one or more rectifier switches arranged to switch at a switching frequency.

In some examples, the controller is arranged to adjust operation of the inverter to drive the output voltage towards the target output voltage. For instance, the inverter may comprise one or more inverter switches. The controller may be arranged to adjust operation of the inverter (e.g. by controlling (e.g. adjusting) operation of the one or more inverter switches), to drive the output voltage towards the target output voltage.

In some examples, the inverter is arranged to operate with a switching frequency. The controller may be arranged to adjust the switching frequency (of the (e.g. one or more inverter switches of the) inverter), to drive the output voltage towards the target output voltage. For example, the voltage converter may be an LLC voltage converter, or any other type of switching frequency controlled voltage converter, and thus it may be possible to vary the output voltage by varying the switching frequency of the inverter.

In some examples, the inverter is arranged to operate with a duty cycle. The controller may be arranged to adjust the duty cycle of the inverter, to drive the output voltage towards the target output voltage. For example, the voltage converter may be a dual active bridge (DAB) voltage converter, or any other type of duty cycle controlled voltage converter, and thus it may be possible to vary the output voltage by varying the duty cycle of the inverter.

The voltage converter may comprise a resonant tank; wherein the rectifier is arranged to receive the alternating voltage via the resonant tank. The resonant tank may comprise a resonant capacitance and a resonant inductance. In use, the voltage may oscillate between the resonant capacitance and the resonant inductance at a resonant frequency of the resonant tank.

The voltage converter may comprise a transformer; wherein the rectifier is arranged to receive the alternating voltage via the transformer. The transformer may provide galvanic isolation between the input voltage and the output voltage. The transformer may be configured as a step-up transformer (e.g. having a primary winding with fewer turns than a secondary winding), a step-down transformer (e.g. having a primary winding with more turns than a secondary winding) or a one-to-one transformer (e.g. having a primary winding and a secondary winding with the same number of turns).

Thus, the voltage converter may be arranged as a step-up converter (to convert a low voltage input voltage to a high(er) voltage output voltage), or as a step-down converter (to convert a high voltage input voltage to a low(er) voltage output voltage).

In some examples, the controller comprises a feedback loop arranged to: receive the power line communication signal and the target DC output voltage; superpose the power line communication signal onto the target DC output voltage; receive (e.g. measure) the output voltage; and compare the output voltage with the target output voltage.

In some examples, the voltage converter comprises a voltage sensor, arranged to measure the output voltage and provide the output voltage to the controller, e.g. to the controller's feedback loop. In some examples, the voltage converter is arranged to receive a value, e.g. a measurement, of the output voltage from an external system. In some examples, the voltage converter is arranged to determine the output voltage using other inputs, e.g. the output current and a resistance of an attached load.

In some examples, the voltage converter comprises a reference voltage source, arranged to provide the target DC output voltage to the controller, e.g. to the controller's feedback loop. In some examples, the controller comprises a memory. The target DC output voltage may be stored on the controller's memory. In some examples, the target DC output voltage is provided by a system external to the voltage converter.

In some examples, the (e.g. controller of the) voltage converter comprises a modulator arranged to generate the power line communication signal. In some examples, the power line communication signal is received from an external system or source.

In some examples, the modulator is arranged to modulate the data signal onto a carrier wave to provide the power line communication signal. In some examples, the modulator is arranged to use amplitude modulation, to modulate the data signal onto a carrier wave to provide the power line communication signal. In some examples, the modulator is arranged to use frequency modulation, to modulate the data signal onto a carrier wave to provide the power line communication signal. Amplitude modulation may enable a frequency of the power line communication signal to remain constant, e.g. the power line communication signal may have the frequency of the carrier wave.

In examples where the voltage converter comprises an inverter, the inverter may be arranged to operate with a switching frequency. A frequency of the carrier wave may be less than the switching frequency of the inverter.

In examples where the voltage converter comprises a rectifier (e.g. an active rectifier), the rectifier may be arranged to operate with a switching frequency. A frequency of the carrier wave may be less than the switching frequency of the rectifier.

In some examples, the voltage converter comprises an output filter arranged to filter out high frequency voltages. The voltage converter may be arranged to provide the output voltage via the output filter. In examples where the voltage converter comprises an inverter arranged to operate with a switching frequency (or a rectifier arranged to operate with a switching frequency), these high frequency components of the output voltage may include the switching frequency of the inverter (or the rectifier).

Thus, in examples where the power line communication signal comprises a data signal modulated onto a carrier wave, by having a frequency of the carrier wave less than the switching frequency of the inverter (or the rectifier) it may be possible to use a low pass filter to filter out the switching frequency of the inverter (or the rectifier) while still enabling the power line communication signal to pass through the filter.

The voltage converter may comprise a DC-DC voltage converter, for instance a LLC voltage converter, a dual active bridge (DAB) voltage converter, a flying capacitor voltage converter or the like. Thus, the input voltage may comprise a substantially DC input voltage.

In some examples, the input voltage comprises a DC input voltage and a second power line communication signal superposed on the DC input voltage. The second power line communication signal may comprise a second data signal. The second data signal may be the same as, or different from, the (first) data signal. For instance, the second data signal may comprise the first data signal.

The second power line communication signal may comprise the second data signal modulated onto a second carrier wave.

A power distribution system may comprise the voltage converter and a module arranged to superpose the second power line communication signal onto the DC input voltage. This module may be any conventional (or non-conventional) module for power line communication, for instance it may include any one or more of a power supply, a coupler and/or a modem for (e.g. arranged to) superposing the second power line communication signal onto the DC input voltage.

The voltage converter may be arranged to extract data from the second power line communication signal, e.g. the second data signal, and generate the (first) power line communication signal based on the extracted data, e.g. the voltage converter may be arranged to generate the (first) data signal based on the second data signal. Thus, the second power line communication signal, and any associated power transmission lines, may be used to transfer data via the voltage converter to one or more systems downstream of the voltage converter.

In some examples, the voltage converter comprises extracting hardware arranged to extract data from the second power line communication signal and generate the (first) data signal based on the extracted data. The extracting hardware may include one or more of: a filter, a voltage sensor and a demodulator.

In some examples, in use, the (first) power line communication signal (and optionally the second power line communication signal) is used for control of a vehicle. The vehicle may be an aircraft, such as an aeroplane, a helicopter or the like.

The disclosure extends to a power distribution system for a vehicle comprising a voltage converter as disclosed herein; wherein the voltage converter is arranged to provide the data signal to control one or more systems of the vehicle. Any or all of the features disclosed herein with reference to the voltage controller may apply equally to the power distribution system, as appropriate.

In some examples, the voltage converter is arranged to provide the data signal to control one or more non-safety critical systems of the vehicle. These may include, for instance, the vehicle's internal lighting, entertainment system, electrical supply for internal seating and the like, the vehicle's air conditioning system or the like.

In some examples, the power distribution system is arranged to provide the second data signal to control one or more safety critical systems of the vehicle. These may include, for instance, the vehicle's engine, brakes, emergency systems or the like.

In examples where the voltage converter comprises an output filter, the second carrier wave may have a higher frequency than the first carrier wave as it may not have to pass through the output filter. Thus, the second power line communication signal may be a high bandwidth signal relative to the (first) power line communication signal. High bandwidth signals may be more suitable for control of safety-critical systems, which in aircraft may include the engine, emergency systems and the like. Low bandwidth signals may be more suitable for control of low risk systems, which in aircraft may include lighting, air conditioning, passengers' seating power supply or the like.

The power distribution system may comprise a (e.g. solid state) power controller. The data signal may be used for controlling operation of the (e.g. solid state) power controller.

The (e.g. solid state) power controller may be arranged to: receive the output voltage; extract the data signal for controlling operation of the (e.g. solid state) power controller from the output voltage; and operate based on the data signal for controlling operation of the (e.g. solid state) power controller. The (e.g. solid state) power controller may be arranged to selectively provide power via one or more current paths. The (e.g. solid state) power controller may be arranged to provide power via the one or more current paths based on the data signal.

The (e.g. solid state) power controller may comprise extracting hardware, such as one or more of: a filter, a voltage sensor and a demodulator; wherein the extracting hardware is arranged to extract the data signal for controlling operation of the solid state power controller from the output voltage (e.g. from the power line communication signal).

The present disclosure also provides a method (e.g. of operating a voltage controller) for converting an input voltage to an output voltage, the method comprising: superposing a power line communication signal onto a target DC output voltage to provide a target output voltage; comparing the output voltage with the target output voltage; and adjusting operation of the voltage converter (that is converting the input voltage to the output voltage) so as to drive the output voltage towards the target output voltage.

It will be apparent that this method may be used to control the voltage converter or power distribution system disclosed herein. As such, any or all of the features of the voltage converter(s) or power distribution system(s) disclosed herein may apply equally to the method, as appropriate. For instance, the method may extend to a method of operating a power distribution system comprising the voltage converter.

In particular, one or more (e.g. all) of the following features may apply to this method.

The voltage converter may comprise a controller arranged to drive the output voltage towards the target output voltage.

The voltage converter may comprise an inverter, and the method may comprise operating the inverter to receive the input voltage and provide an alternating voltage.

The voltage converter may comprise a rectifier, and the method may comprise operating the rectifier to rectify the alternating voltage to provide the output voltage.

The method may comprise adjusting operation of the inverter drive the output voltage towards the target output voltage.

The method may comprise operating the inverter with a switching frequency; and adjusting the switching frequency to drive the output voltage towards the target output voltage.

The method may comprise operating the inverter with a duty cycle; and adjusting the duty cycle to drive the output voltage towards the target output voltage.

The controller may comprise a feedback loop.

The method may comprise: receiving the power line communication signal and the target DC output voltage; superposing the power line communication signal onto the target DC output voltage; receiving the output voltage; and comparing the output voltage with the target output voltage.

The voltage converter may comprise a modulator.

The method may comprise modulating the data signal onto a carrier wave to provide the power line communication signal.

The method may comprise operating the inverter with a switching frequency; wherein a frequency of the carrier wave is less than the switching frequency.

The voltage converter may comprise a low-pass (output) filter, and the output voltage may be provided via the low-pass filter. The low-pass filter may be arranged to filter out the switching frequency of the inverter, and allow the frequency of the carrier wave to pass through the output filter.

The method may comprise filtering out the switching frequency of the inverter (e.g. using the low-pass filter) and allowing the frequency of the carrier wave to pass (e.g. through the low-pass filter) before (e.g. immediately before) providing the output voltage.

The voltage converter may be a DC-DC voltage converter; wherein the input voltage is a substantially DC input voltage.

The input voltage may comprise a DC input voltage and a second power line communication signal, the second power line communication signal comprising a second data signal, superposed on the DC input voltage.

The method may comprise extracting the second data signal from the second power line communication signal and generating the (first) power line communication signal based on the extracted second data signal.

The voltage converter may comprise extracting hardware, such as one or more of: a filter, a voltage sensor and a demodulator.

The voltage converter may comprise a modulator.

The voltage converter and the modulator may be arranged to act together to perform the steps of: extracting the second data signal from the second power line communication signal; and generating the (first) power line communication signal based on the extracted second data signal.

A power distribution system may comprise any of the examples of voltage converters disclosed herein and a (e.g. solid state) power controller.

The method may comprise controlling operation of the (e.g. solid state) power controller based on the data signal.

The method may comprise receiving the output voltage; extracting the data signal for controlling operation of the (e.g. solid state) power controller from the output voltage; and operating the (e.g. solid state) power controller based on the extracted data signal.

The method may comprise providing the data signal to control one or more systems of a vehicle. For instance, the method may comprise providing the (first) data signal to control one or more non-safety critical system of the vehicle and/or providing the second data signal to control one or more safety critical systems of the vehicle.

### Brief Description of Drawings

One or more non-limiting examples will now be described, by way of example only, and with reference to the accompanying figures in which:
Figure 1 shows a power distribution system of an aircraft, which includes a DC-DC voltage converter;
Figure 2 shows the DC-DC voltage converter shown in Figure 1; and
Figure 3 shows a method of operating the DC-DC voltage converter shown in Figures 1 and 2;
Figure 4 shows the frequency of various components of the output voltage of the DC-DC voltage converter shown in Figure 2;
Figure 5 shows examples of outputs of a DC-DC voltage converter with and without a power line communication superposed onto the DC output voltage; and
Figure 6 shows waveforms of voltages present in a DC-DC voltage converter such as the DC-DC voltage converter shown in Figures 1 to 3, these waveforms show how operation of the inverter may be adjusted to provide the target output voltage.

### Detailed Description

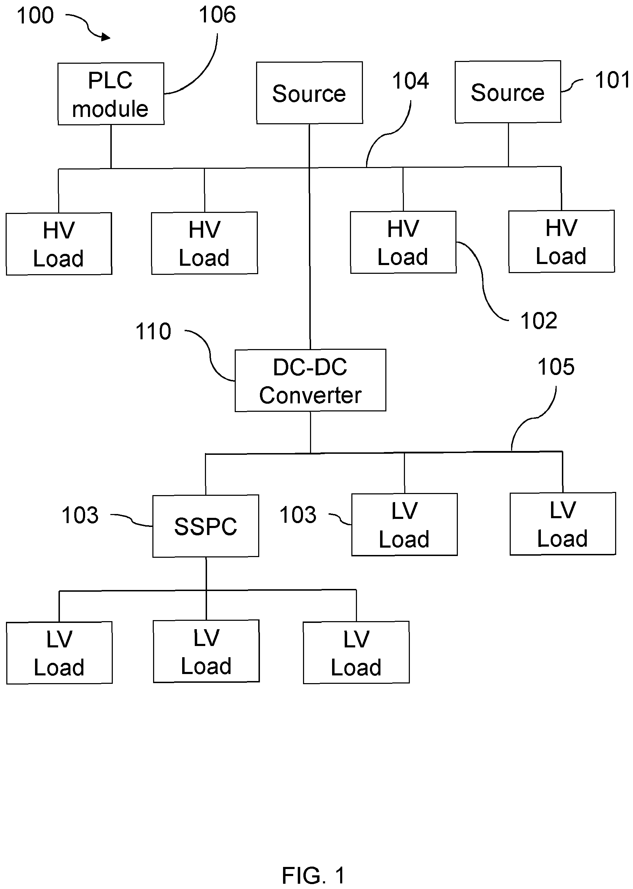

Figure 1 shows a power distribution system 100 of an aircraft.

The power distribution system 100 includes several, high voltage, voltage sources 101. Collectively, these are arranged to provide a high voltage DC voltage of between approximately 400 to 1000 volts.

The power distribution system 101 includes a high voltage power transmission line 104, connected to the voltage sources 101. Various high voltage loads 102 are attached to, and arranged to receive power from, the high voltage power transmission line 104. These high voltage loads 102 may include the aircraft's engine.

A power line communication (PLC) module 106 is arranged to superpose a power line communication signal onto the high voltage power transmission line 104. This power line communication signal includes a data signal modulated onto a high frequency carrier wave. In use, the data signal is used to control operation of one or more of the high voltage loads 102.

A DC-DC voltage converter 110 is arranged to convert the high voltage power supply to a lower DC output voltage, and to superpose another power line communication signal on the low DC output voltage.

A low voltage power transmission line 105 is arranged to distribute the output of the DC-DC voltage converter 110 to various connected low voltage loads 103. The low voltage loads 103 include internal lighting for the aircraft, power supply to passengers' seats on the aircraft and the aircraft's air conditioning system.

The second power line communication signal (superposed onto the low DC output voltage) includes a (second) data signal modulated onto a low frequency carrier wave. The second data signal is a subset of the (first) data signal.

A solid state power controller (SSPC) 103 is arranged between the DC-DC converter 110 and some of the low voltage loads 103. The solid state power controller 103 is arranged to selectively provide power to the low voltage loads 103 connected to it based on a received input signal. In this case, in use, the received input signal is the second data signal, received via the low voltage power transmission line 105.

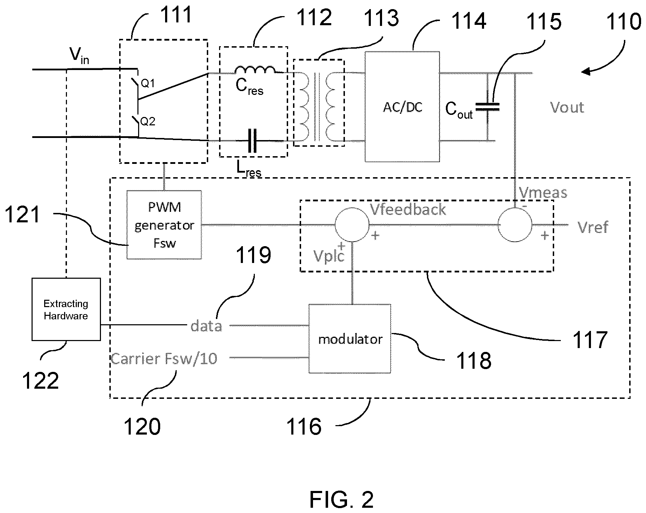

Figure 2 shows the DC-DC voltage converter 110 shown in Figure 1 for converting a high voltage Vᵢₙ, provided by the high voltage power transmission line 104, to a lower voltage Vₒᵤₜ, provided to the low voltage power transmission line 105.

The voltage converter includes: an inverter 111; a resonant tank 112, which includes a resonant capacitor Cᵣₑₛ and a resonant inductor Lᵣₑₛ; a transformer 113; a rectifier 114; and an output filter 115, which in this example is merely a capacitor Cₒᵤₜ. The voltage converter 110 also includes a controller 116 arranged to control operation of the inverter 111. The controller 116 includes a feedback loop 117, a modulator 118 and a pulse generator 121. The voltage converter 110 also includes extracting hardware 122, which is arranged to extract the previously mentioned second data signal from the input voltage Vᵢₙ.

The inverter 111 is arranged to receive the high voltage Vᵢₙ. The inverter 111 shown in Figure 2 is a half-bridge inverter. Half-bridge inverters include two inverter switches (Q1 and Q2) and, in use, provide an alternating square wave voltage (which alternates between zero volts and Vᵢₙ) by alternately operating one inverter switch (e.g. Q1) and the other inverter switch (e.g. Q2) in a conducting state, with some dead time in between. For instance, when the first inverter switch Q1 conducts and the second inverter switch Q2 does not conduct, the output of the inverter 111 is Vᵢₙ, whereas the output is zero when Q2 conducts and Q1 does not conduct.

In Figure 2, the inverter switches Q1 and Q2 have been depicted as conventional switches, however in practice they are actually metal-oxide-semiconductor field effect transistors (MOSFETs). Use of MOSFETs may enable the inverter 111 to operate the inverter switches Q1 and Q2 using zero voltage switching.

The pulse generator 121 is arranged to provide a first inverter switch pulse, for operating the first inverter switch Q1 in a conducting state, and a second inverter switch pulse, for operating the second inverter switch Q2 in a conducting state. In this example, the voltage converter 110 is a pulse width modulated voltage converter. Therefore, in use, the output voltage Vₒᵤₜ is adjusted by adjusting the pulse width of the alternating square wave voltage provided by the inverter 111, e.g. by adjusting the pulse width of the first inverter switch pulse and the second inverter switch pulse. In other examples, the voltage converter 110 could instead be a frequency controlled converter, wherein the output voltage Vₒᵤₜ is adjusted by adjusting the frequency of the alternating square wave voltage provided by the inverter 111.

The resonant tank 112 is arranged to receive the alternating square wave voltage from the inverter 111. In use, charge oscillates between the resonant capacitance and the resonant inductance of the resonant tank 112 at a resonant frequency. The frequency of the alternating square wave voltage provided by the inverter 111 is substantially the same as the resonant frequency. The inclusion of the resonant tank 112 may improve the efficiency of the voltage converter 110.

A primary winding of the transformer 113 is connected to the resonant tank 112 such that, in use, a resonant voltage is applied to the transformer's 113 primary winding as charge oscillates between the resonant tank's 112 resonant capacitance and resonant inductance. This induces a voltage across a secondary winding of the transformer 113. In this example, the transformer 113 is a step-down transformer.

The rectifier 114 is connected to the secondary winding of the transformer 113 and is arranged to rectify the voltage induced across the secondary winding to provide a rectified voltage. In this example, the rectifier is a passive full-wave rectifier, although in other examples it may be an active rectifier and/or may have a different topology.

The output filter 115 is connected to the rectifier 114 and is arranged to filter out high frequency components of the rectified voltage. In particular, the output filter 115 is arranged to filter out the switching frequency of the inverter 111 so as to remove any noise associated with operation of the inverter 111 from the rectified voltage. The low voltage Vₒᵤₜ is provided at the output of the output filter 115. In this example, the low voltage Vₒᵤₜ is approximately 28 volts.

The controller 116 also includes a modulator 118, arranged to receive a carrier wave 120 and a data signal 119, and modulate the data signal 119 onto the carrier wave 120 to provide a power line communication signal V_{plc}. Superposition may happen computationally, by computation of the waveform produced by superposing the data signal 119 onto the carrier wave 120 (i.e. the power line communication signal V_{plc} may be generated indirectly without generating waveforms of the data signal 119 and the carrier wave 120 independently and combining these independent waveforms).

In use, the modulator 118 receives the data signal 119 from extracting hardware 122. The extracting hardware 122 is arranged to extract the data signal 119 from the input voltage Vᵢₙ. This extracting hardware 122 includes a filter, a voltage sensor and a demodulator which act in combination to extract the data signal 119 from the input voltage Vᵢₙ. The filter is arranged to filter the input voltage Vᵢₙ to provide the high frequency power line communication signal to the voltage sensor. The voltage sensor is arranged to measure the high frequency power line communication signal and provide the measured voltage to the demodulator. This high frequency power line communication signal includes the data signal 119 modulated onto a high frequency carrier wave. The demodulator is arranged to extract the data signal 119 from the high frequency power line communication signal.

In other examples, the data signal 119 may be provided by another data source (for instance if the input voltage Vᵢₙ did not include a power line communication signal, or if this signal did not contain the data signal 119 for transmission at the output of the voltage converter 110). For instance, the data signal 119 may be provided via a dedicated communications bus such as a controller area network (CAN) bus, an avionix full-duplex switched ethernet (AFDX), a variation of an AFDX bus known as a uAFDX bus, or the like. If the input signal 119 was instead provided by a dedicated bus, the extracting hardware 122 may be replace by conventional hardware as specified by the bus standard.

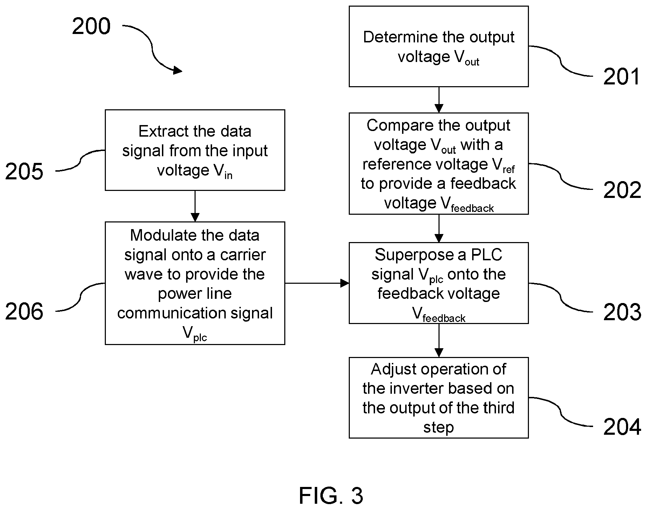

Operation of the voltage converter 110 will now be described in more detail with reference to Figure 3, which shows a method 200 of operating the voltage converter 110 shown in Figure 2.

The first step 201 of the method 200 is to determine the output voltage Vₒᵤₜ. In this example, the output voltage Vₒᵤₜ is measured by a voltage sensor (not shown) to provide a measured output voltage Vₘₑₐₛ. In other examples, the output voltage may be determined indirectly, e.g. by using a measurement of the output current.

The second step 202 of the method 200 is to compare the (measured) output voltage Vₘₑₐₛ with a reference voltage V_{ref} to provide a feedback voltage V_{feedback}, which is the difference between the (measured) output voltage Vₘₑₐₛ and the reference voltage V_{ref}. The reference voltage V_{ref} is the target DC component of the output voltage Vₒᵤₜ. In this example, the reference voltage V_{ref} is a relatively low DC voltage of approximately 28 volts.

The third step 203 of the method 200 is to superpose a power line communication signal V_{plc} onto the feedback voltage V_{feedback} provided by the second step 202. The output of the third step 203 is the difference between the (measured) output voltage Vₘₑₐₛ and a target output voltage. The target output voltage is the sum of the target DC component V_{ref} of the output voltage Vₒᵤₜ and the power line communication signal V_{plc} to be superposed onto the DC component V_{ref} of the output voltage Vₒᵤₜ.

The controller's 116 feedback loop 117 is used to perform the second 202 and third 203 steps of the method 200, and the output of the feedback loop 117, i.e. the output of the third step 203, is provided to the pulse generator 121.

The fourth step 204 of the method 200 is to adjust operation of the inverter 111, in particular the duty cycle of the inverter 111, based on the output of the third step 203, i.e. the difference between the measured output voltage Vₘₑₐₛ and the target output voltage. In use, the controller 116 is arranged to adjust operation of the inverter to drive the output voltage Vₒᵤₜ towards the target voltage.

The fourth step 204 of the method 200 may be achieved by increasing the duty cycle of the inverter 111 if the received input (from the third step 203) is positive. This results in an increased output voltage Vₒᵤₜ. Conversely, the duty cycle may be reduced if the received input (from the third step 203) is negative, which reduces the output voltage Vₒᵤₜ. In this manner, the controller 116 is able to drive the output voltage Vₒᵤₜ towards the target output voltage (which, as previously explained, is the superposition of a power line communication signal V_{plc} onto a target DC output voltage V_{ref}).

The method 200 also includes the steps associated with generating the power line communication signal V_{plc}. This includes the step 205 of extracting the data signal 119 from the input voltage Vᵢₙ using the extracting hardware 122. This also includes the step 206 of modulating the data signal 119 onto a carrier wave 120 to provide the power line communication signal V_{plc} using the modulator 118.

As a result, it is possible to provide power line communication on the output of the voltage converter 110 without requiring additional infrastructure, such as a dedicated data network and/or a dedicated modem.

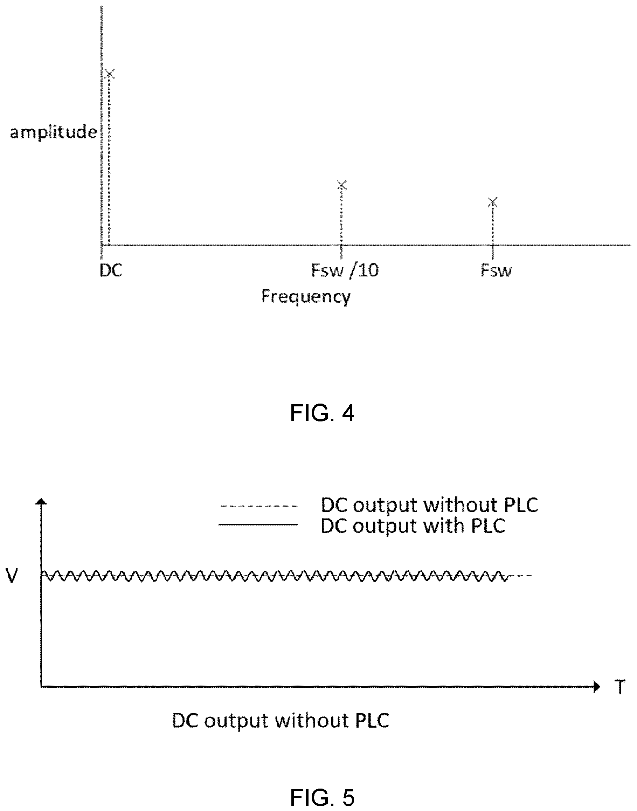

Figure 4 shows the frequency of various components of the output voltage Vₒᵤₜ shown in Figure 2. A DC component of the output voltage Vₒᵤₜ, which corresponds to V_{ref}, has substantially zero frequency. High frequency noise is generated at the switching frequency of the inverter 111 and this is also shown in Figure 4. Finally, the power line communication signal has a frequency of approximately one tenth the switching frequency of the inverter 111 so as to avoid being filtered out by the output filter 115, this corresponds to the frequency of the carrier wave 120.

Figure 5 shows examples of outputs of a DC-DC voltage converter with and without a power line communication superposed onto the DC output voltage. The power line communication signal is formed by frequency modulating or amplitude modulating a carrier wave with a data signal. As can be seen in the Figure, the DC component of the voltage remains constant, while the AC component of the voltage oscillated at approximately the frequency of a carrier wave.

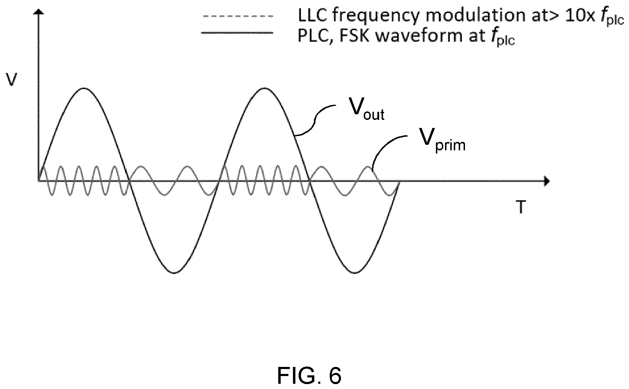

Figure 6 shows waveforms of the output voltage Vₒᵤₜ of a voltage converter that is similar to the previously described voltage converter 110, and the voltage Vₚᵣᵢₘ across the primary, input, winding of the transformer 113. The frequency of the voltage Vₚᵣᵢₘ corresponds to the switching frequency of the inverter 111. In this example, the output voltage Vₒᵤₜ of the voltage converter is adjusted by adjusting the switching frequency of the inverter switches (as opposed to adjustment of the duty cycle as previously described).

As can be seen in Figure 6, the switching frequency of the inverter 111 is increased to increase the output voltage Vₒᵤₜ. Similarly, the switching frequency of the inverter 111 is decreased to decrease the output voltage Vₒᵤₜ.

It will be appreciated from the above that a voltage converter according to the present disclosure may, in at least some examples, allow a power line communication signal to be superposed onto the output voltage of the DC voltage converter without requiring a separate data network, dual modems or the like.

It will be appreciated by those skilled in the art that this disclosure has been illustrated by describing one or more specific examples thereof, but is not limited to these examples; many variations and modifications are possible, within the scope of the accompanying claims.

## Claims

1. A voltage converter for converting an input voltage to an output voltage, the voltage converter comprising:
a controller arranged to:
superpose a power line communication signal onto a target DC output voltage to provide a target output voltage;
wherein the power line communication signal comprises a data signal;
compare the output voltage of the voltage converter with the target output voltage; and
adjust operation of the voltage converter so as to drive the output voltage towards the target output voltage.

2. The voltage converter as claimed in claim 1, wherein the voltage converter comprises:
an inverter arranged to receive the input voltage and provide an alternating voltage; and
a rectifier arranged to rectify the alternating voltage to provide the output voltage;
wherein the controller is arranged to adjust operation of the inverter to drive the output voltage towards the target output voltage.

3. The voltage converter as claimed in claim 2, wherein the inverter is arranged to operate with a switching frequency; and
wherein the controller is arranged to adjust the switching frequency to drive the output voltage towards the target output voltage.

4. The voltage converter as claimed in claim 2 or 3, wherein the inverter is arranged to operate with a duty cycle; and
wherein the controller is arranged to adjust the duty cycle to drive the output voltage towards the target output voltage.

5. The voltage converter as claimed in any one of the preceding claims,
wherein the controller comprises a feedback loop arranged to:
receive the power line communication signal and the target DC output voltage;
superpose the power line communication signal onto the target DC output voltage;
receive the output voltage; and
compare the output voltage with the target output voltage.

6. The voltage converter as claimed in any one of the preceding claims, wherein the voltage converter comprises a modulator arranged to generate the power line communication signal.

7. The voltage converter as claimed in claim 6, wherein the modulator is arranged to modulate the data signal onto a carrier wave to provide the power line communication signal.

8. The voltage converter as claimed in claim 7, wherein the voltage converter comprises an inverter arranged to receive the input voltage and provide an alternating voltage;
wherein the controller is arranged to adjust operation of the inverter to drive the output voltage towards the target output voltage;
wherein the inverter is arranged to operate with a switching frequency; and
wherein a frequency of the carrier wave is less than the switching frequency.

9. The voltage converter as claimed in claim 8, wherein the voltage converter comprises a low-pass output filter arranged to:
filter out the switching frequency of the inverter; and
allow the frequency of the carrier wave to pass through the output filter;
wherein the voltage converter is arranged to provide the output voltage via the output filter.

10. The voltage converter as claimed in any one of the preceding claims, wherein the voltage converter comprises a DC-DC voltage converter; and
wherein the input voltage is a substantially DC input voltage.

11. The voltage converter as claimed in any one of the preceding claims, wherein the power line communication signal is a first power line communication signal;
wherein the input voltage comprises a DC input voltage and a second power line communication signal superposed on the DC input voltage;
wherein the second power line communication signal comprises a second data signal; and
wherein the voltage converter is arranged to extract the second data signal from the second power line communication signal and generate the first power line communication signal based on the extracted second data signal.

12. A power distribution system for a vehicle, wherein the power distribution system comprises the voltage converter as claimed in any one of the preceding claims; and
wherein the voltage converter is arranged to provide the data signal to control one or more systems of the vehicle.

13. The power distribution system as claimed in claim 12, wherein the voltage converter is arranged to provide the data signal to control one or more non-safety critical systems of the vehicle; and
optionally wherein the power distribution system is arranged to provide the second data signal to control one or more safety critical systems of the vehicle.

14. The power distribution system as claimed in claim 12 or 13, wherein the power distribution system comprises a solid state power controller;
wherein the data signal is used for controlling operation of the solid state power controller; and
wherein the solid state power controller is arranged to:
receive the output voltage;
extract the data signal for controlling operation of the solid state power controller from the output voltage; and
operate based on the data signal for controlling operation of the solid state power controller.

15. A method for converting an input voltage to an output voltage, the method comprising:
superposing a power line communication signal onto a target DC output voltage to provide a target output voltage;
wherein the power line communication signal comprises a data signal;
comparing the output voltage with the target output voltage; and
adjusting operation of a voltage converter so as to drive the output voltage towards the target output voltage.
